# EUROPEAN PATENT APPLICATION

(11) **EP 4 011 854 A1**
(43) Date of publication of application: **15.06.2022**
(21) Application number: 20383080.7
(22) Date of filing: 11.12.2020
(51) Int. Cl.: C05F 5/00, C05F 17/20, C05F 17/50

(54) **USE OF THE LIQUID FRACTION OF AN OLIVE MILL SOLID WASTE DIGESTATE IN FERTIRRIGATION TREATMENTS**

(71) Applicant: Consejo Superior de Investigaciones Científicas (CSIC), 28006 Madrid (ES); Universidad de Sevilla, 41013 Sevilla (ES); Universidad Pablo de Olavide, 41013 Sevilla (ES)
(72) Inventor: FERNÁNDEZ RODRÍGUEZ, María José, 41013 Sevilla (ES); BORJA PADILLA, Rafael, 41013 Sevilla (ES); RINCÓN LLORENTE, Bárbara María, 41013 Sevilla (ES); MANCILLA-LEYTÓN, Juan Manuel, 41013 Sevilla (ES); JIMÉNEZ RODRÍGUEZ, Antonia, 41013 Sevilla (ES)
(74) Representative: Pons

(57) **Abstract**

The present invention relates to the use of a by-product of the olive oil production, particularly the use of the liquid fraction of an olive mill solid waste digestate in fertirrigation treatments. The process comprises several steps which include removal of olive stone pieces from olive mill solid waste, anaerobic digestion of the olive mill solid waste after the olive stone removal and centrifugation of the digestate resulting from the previous step followed by solid - liquid separation.

## Description

### TECHNICAL FIELD

The present invention relates to the use of a by-product of the olive oil production. Accordingly it can be considered as included in the field of agricultural technology.

### BACKGROUND ART

The great health benefits of olive oil have led to a worldwide tendency toward its consumption (Gavahian et al., 2019 Health benefits of olive oil and its components: Impacts on gut microbiota antioxidant activities, and prevention of non communicable diseases,Trends in Food Science and Technology, 88, 220-227).

In Spain alone the olive oil production was of 1,793,500 tons at the end of the 2018/19 season. Such increases in olive oil consumption have brought, and continue to bring changes in the sector. In the 1990s, the production of olive oil underwent an improvement by introducing the two-phase olive oil system. This new system entailed a reduction in the use of water as well as a reduction in energy consumption during the process and a marked improvement in the quality of the product. The modernization of the sector brought a reduction in the volume of wastewaters generated but, by contrast, large amounts of olive mill solid waste (OMSW) are produced. It is estimated that in Spain alone, between 2 and 4 Mtons of OMSW are generated each year in a short period of time (November to September) (Borja et al., 2006 Anaerobic biodegradation of two-phase olive mill solid wastes and liquid effluents: Kinetic studies and process performance, Journal of Chemical Technology and Biotechnology, 81, 1450-1462). The OMSW is characterized as having a high organic matter content, a moisture content of around 70%, as well as an acidic pH as a consequence of its phenol, polyalcohol and sugar contents (Borja et al., 2006 referred above). The large amount of OMSW generated each season and its characteristics represent an environmental hazard, so the valorization of this by-product is certainly necessary in order to reduce the impact that olive oil industries have on the environment (Borja et al., 2006 referred above). The valorization of this type of by-product is an increasing trend in order to reduce, reuse and recycle.

Anaerobic digestion (AD) is a key tool for organic waste treatment, since organic matter is mineralized, in absence of oxygen, by the action of a consortium of microorganisms and, therefore, the pollution load of this type of waste is reduced (Abad et al., 2019, Promoting circular economy in the surroundings of an organic fraction of municipal solid waste anaerobic digestion treatment plant: Biogas production impact and economic factors, Bioresource Technology, 283, 10-17). After the AD process, a renewable combustible, such as biogas (mixture of CH₄ and CO₂, mainly) with a high concentration of methane and high calorific value is produced. In addition to biogas, a semi-stabilized by-product with a high moisture content (digestate) is generated (O'Brien et al., 2019 Integrating anaerobic co-digestion of dairy manure and food waste with cultivation of edible mushrooms for nutrient recovery, Bioresource Technology, doi:10.1016/j.biortech.2019.121312). During the AD process, both nitrogen and phosphorus are mineralized, but they are not eliminated from the system, so the digestate is characterized as being rich in nitrogen and phosphorus, hence its great potential for use as soil amendment or fertilizer (Fernandez-Bayo et al., 2017, Assessment of Two Solid Anaerobic Digestate Soil Amendments for Effects on Soil Quality and Biosolarization Efficacy, Journal of Agricultural and Food Chemistry, vol. 65, no. 17, 3434-3442).

The use of digestate as fertilizer is a great opportunity to reduce the environmental impact derived from mineral fertilization; the fertilization from digestate could be complementary, and in some cases, it is possible to obtain synthesis fertilizers and optimize the profitability of farms in the medium term. The quality and characteristics of this digestate depend on the substrate used in AD. Currently, most of the studies carried out with digestates from the AD are of cattle manure o pig slurry (O'Brien et al., 2019, referred above). These digestates have high nitrogen concentrations and the added handicap that they require a sterilization process in order to eliminate pathogens (Qi et al., 2019, The survival of pathogenic bacteria and plant growth promoting bacteria during mesophilic anaerobic digestion in full-scale biogas plants, Animal Science Journal, vol. 90, no. 2, 297-303).

The AD of OMSW is a well-studied process, from which values of up to 321 ml CH₄ g VS_{added}⁻¹ are obtained (Fernandez-Rodriguez et al., 2019, Influence of the cell wall of Chlamydomonas reinhardtii on anaerobic digestion yield and on its anaerobic co-digestion with a carbon-rich substrate, Process Saf. Environ. Protect, 128, 167-175). The use of digestate would bring another added value to the OMSW AD process and provides sustainable waste management. At present, the use of digestates has not been exploited efficiently and it is necessary to continue investigating the possible ways to recycle this by-product. In addition, the use of OMSW digestate has not yet been investigated.

The aim of this study was to evaluate the influence of the use of the liquid fraction of an OMSW digestate in fertirrigation treatments on the growth of a Mediterranean herbaceous specie, *Lolium rigidum,* common in pastures with high forage value and frequently used as feed for cattle.

Some prior art documents have been identified:
WO2000001622 discloses a method and installation for treating waste water from oil seed and cereal processing, particularly olive oil mill waste water (OMW). The method applies to fresh waste water, apparently derived from a three phase system, which is pre-treated by subjecting it to acidification with biogenic flocculation and separation of solid particles. The pre-treated waste water is then anaerobically and mesophilically processed using a carrier-bound biomass suspension. No direct use of the liquid fraction in fertirrigation is referred.

EP1849756 discloses a process which consists of a mechanical mixing of cork industry residues, namely cork dust, with residues and effluents from olive oil production units thereby producing sludge or pulp that can be used as a fertilizer. WO2009/147693 relates to an integrated process for recovery of a polyphenol fraction and anaerobic digestion of olive mill wastes. It is indicated (page2, lines 7 to 11) that the olive mill wastewaters, if directly introduced in the water streams, would in very short times induce anoxia phenomena due to a depletion of oxygen dissolved in water, thus damaging not only the water fauna, but also the aerobic microor∼
ganisms, that need oxygen to perform their self-depurating action. Therefore, in the disclosed process (see page21, lines 13 to 17), the liquid fraction is submitted to reverse osmosis and thermal concentration.

In Christoforou E. et al. "A review of olive mill solid wastes to energy utilization techniques", Waste Management 49 (2016), 346 - 363, the study aims to present the main findings and major conclusions of previously published works undertaken in the last two decades focused on the characterization of olive mill solid wastes and the utilization of different types of solid olive mill residues for energy purposes. Consequently, it appears that there is a need for a process for the treatment of OMSW which renders a liquid part fraction, after anaerobic digestion, directly usable in fertirrigation.

### BRIEF DESCRIPTION OF THE INVENTION

The object of the present invention is the use of the liquid fraction of an olive mill solid waste digestate in fertirrigation treatments through a process which comprises:
a) removal of olive stone pieces from olive mill solid waste
b) anaerobic digestion of the olive mill solid waste after the olive stone removal
c) centrifugation of the digestate resulting from the previous step followed by solid - liquid separation
d) fertirrigation with the liquid fraction of the olive mill solid waste digestate.

In preferred embodiments:
- the olive stone pieces are removed from olive mill solid waste using a 2 mm mesh
- the anaerobic digestion is carried out at mesophilic temperature (between 35-38°C) in anaerobic reactors inoculated with biomass obtained from a brewery anaerobic sludge blanket reactor at an inoculum/substrate ratio of 2.
- centrifugation of the digestate is performed at 2000 rpm during 2 min.

The liquid fraction of olive mill solid waste digestate is tested for fertirrigation of herbaceous species, particularly *Lolium rigidum* var. *Wimmera.*

Two fertirrigations with the liquid fraction of the olive mill solid waste digestate were applied resulting in the treatment that best contributed to the development of *Lolium rigidum,* improving the growth of the aerial biomass, photosynthetic rate and nutritional content of the seedling.

There are important differences of the process of use according to the present invention when compared to the identified prior art:
WO2009/147693 relates to olive mill wastewaters and olive husks from 3-phase and 2-phase systems. Regarding olive husks, the document explicitly indicates that for olive husks recovery (solid phase) the process comprises the extraction of olive oil by centrifugation, the extraction of the olive stone by centrifugation, and the drying of the flash (in a drum or a fluidized bed dryer) with subsequent transformation into pellets. Accordingly, it appears that the substrate for AD is olive mill wastewater and not the 2-phase system solid waste.

In the method for use of the proposed invention of the present application, the AD is carried out on olive mill solid waste. In no embodiment of the present application is it suggested the use of olive mill wastewater directly for fertirrigation. Additionally, WO2009/147693 applies pre-dilution, centrifugation, selective fractionation for the recovery of polyphenol compounds through a membrane process and adsorption on resins as well as pretreatment in aerobic and anaerobic attached-biomass columns. In the present application, the liquid fraction resulting from the AD step is directly used for fertirrigation without any previous pre-dilution, centrifugation or polyphenol recovery prior to the AD step.

In WO2000001622 it is explicitly indicated that the fresh waste water is pre-treated by subjecting it to acidification with biogenic flocculation and separation of solid particles. The pre-treated waste water is then anaerobically and mesophilically processed using a carrier-bound biomass suspension. There are two clear differences when compared with the object of the present application:
- the proposed method of use does not work with fresh waste water, but with two-phase olive mill solid waste, OMSW.
- there are no pre-treatments or flocculation before the AD step. The method of use is directly applied to the OMSW, with only a previous removal of olive stone pieces using a mesh.

Regarding EP1849756B1 the process consists of a mechanical mixing of cork industry residues, namely cork dust, with residues and effluents from olive oil production units thereby producing a sludge or pulp that can be used as a fertilizer. Again, the process refers to effluents or waste waters, not the liquid fraction after AD of OMSW and no mixing is proposed with other residues in the present invention. Finallly, Christoforou E. et al. "A review of olive mill solid wastes to energy utilization techniques", Waste Management 49 (2016), mentions digestates after AD, but does not refer to the use of liquid fraction resulting from AD carried out on OMSW from a two - phase olive oil system.

### BRIEF DESCRIPTION OF THE FIGURES

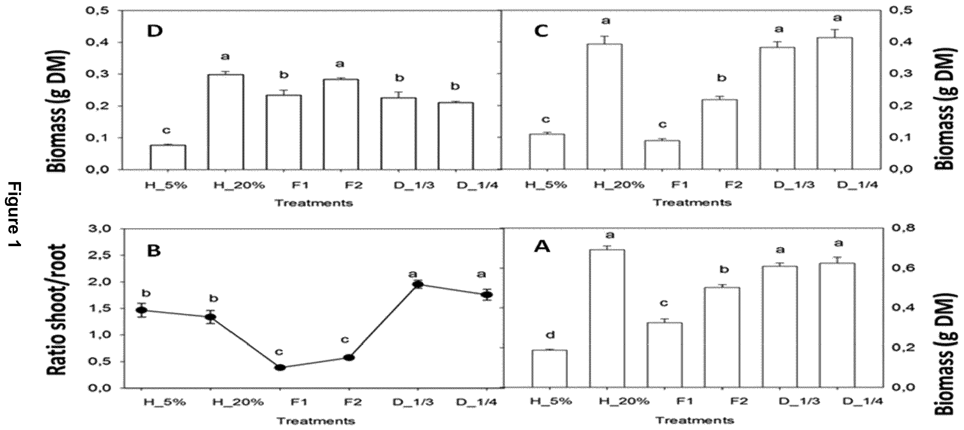

**Figure 1****:** Total biomass (A), root/shoot ratio (B), shoot biomass (C) and root biomass (D) of *Lolium rigidum* var. *Wimmera* grown in the different OMSW digestate treatments. Where OMSW D: raw olive mill solid waste digestate for amendment of a nutrient-poor soil, D1/3: mixture 25% OMSW D-75 % silica and D1/4: mixture 20% OMSW D-80% silica, respectively. H5% and H20% are the controls with inorganic Hoagland nutrient solution at 5% (nutrient poor soil) and 20% nutrient rich soil), and F1 and F2 are the liquid fraction of digestate used as fertilizer with one and two fertirrigates, respectively. Values represent mean ± standard error. Different letters indicate means that are significantly different from each other (Tukey, p < 0.05)

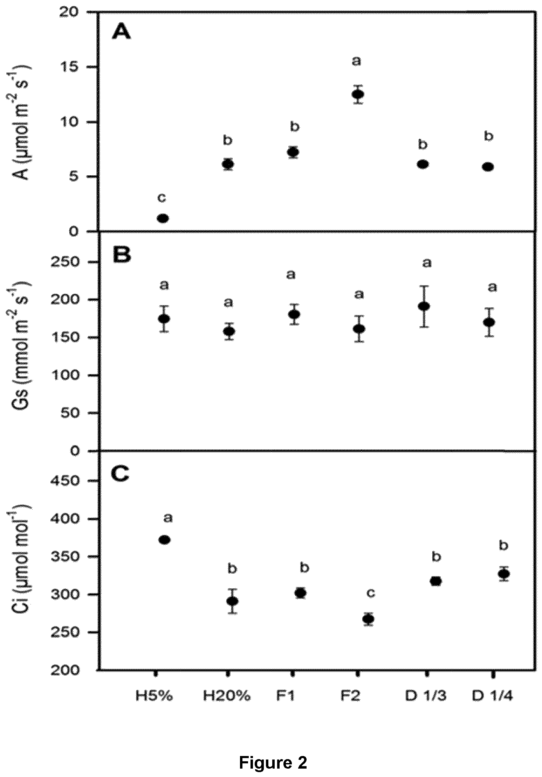

**Figure 2****:** Net photosynthetic rate, A (A), stomatal conductance, Gs (B), and intercellular CO₂ concentration, Ci (C) in randomly selected fully developed leaves of *Lolium rigidum* var. *Wimmera* grown in the different OMSW digestate treatments. Where OMSW D: raw olive mill solid waste digestate for amendment of a nutrient-poor soil, D1/3: mixture 25% OMSW D-75 % silica and D1/4: mixture 20% OMSW D-80% silica, respectively. H5% and H20% are the controls with inorganic Hoagland nutrient solution at 5% (nutrient poor soil) and 20% nutrient rich soil), and F1 and F2 are the liquid fraction of digestate used as fertilizer with one and two fertirrigates, respectively. Values represent mean ± standard error. Different letters indicate means that are significantly different from each other (Tukey, *p* < 0.05)

### DETAILED DESCRIPTION OF AN EMBODIMENT OF THE INVENTION

### Digestate

Digestate is the semi-liquid by-product resulting after the AD. The digestates used were collected after the AD of olive mill solid waste (OMSW) carried out at mesophilic temperature (between 35-38 °C) in batch mode. Anaerobic reactors were inoculated with biomass obtained from an industrial up-flow anaerobic sludge blanket reactor from a brewery located in Sevilla (Spain). The inoculum to substrate ratio in the AD was 2 (volatile solid basis).

The OMSW was collected from the Experimental Olive Oil Mill Factory located in the 'Instituto de la Grasa (CSIC)', Seville (Spain). Olive stone pieces were removed using a 2 mm mesh before AD process.

### Digestate characterization

Total solids (TS), Volatile solids (VS), soluble chemical oxygen demand (SCOD), total alkalinity (TA) and total Kjeldahl nitrogen (TKN) were analyzed in accordance with Standard methods [American Public Health et al., "Standard Methods for the Examination of Water and Wastewater", APHA-AWWA-WEF, Washington, D.C. (2005)]. Chemical oxygen demand (COD) was determined by the method described by Raposo et al. 2008 ("Assessment of a modified and optimised method for determining chemical oxygen demand of solid substrates and solutions with high suspended solid content" Talanta 76(2): 448-4538). pH was analyzed using a pH-meter model Crison 20 Basic. C and N were determined through an Elemental Analyzer LECO CHNS-932 (Leco Corporation, St Joseph, MI, EEUU). Heavy metals were analyzed by inductively coupled plasma (ICP-OES) (VARIAN ICP 720-ES).

### Main chemical parameters of the digestate

The main characteristics of the OMSW digestate are shown in Table 1. The pH of the OMSW digestate was 7.91 ± 0.16, similar to values reported for the digestate of dairy manure and food waste anaerobic co-digestion (pH = 8.4) and more alkaline than the pH reported for the digestate of microalgae and primary sludge anaerobic co-digestion (pH = 7.30 ± 0.15). This value is within the normal pH range of the soil of the Mediterranean area. The total solids (TS) content of the digestate was 2.80 ± 0.08% with 73.8% of VS. The carbon/nitrogen (C/N) ratio of the OMSW digestate (C/N = 11 ± 0.8) was higher than the C/N ratio of microalgal digestate (C/N = 3.17) but similar to that reported for the anaerobic co-digestion digestate (C/N = 15.3). The characteristics of digestate depend on the substrate used during the AD process. The C/N contents of microalgae are between 5 and 12 (Klassen et al., 2015).

On the other hand, one of the benefits of anaerobic co-digestion is that by using two or more substrates, the C/N ratios are balanced. The OMSW C/N ratio is 31.4 near of the range established as optimum for the AD process (C/N = 20-30). The OMSW digestate C/N ratio was 11 ± 0.8, which implies a lower nitrogen content compared to the microalgal digestates (C/N = 3.17) or cattle manure digestates (C/N = 1.2). The C/N ratio of the OMSW digestate was within the range described as a typical value for stable organic materials. The total nitrogen content of the OMSW digestate was 1.14 ± 0.12 g L⁻¹ (Table 1), similar value to the one assigned to co-digestion digestates of thermally pretreated microalgae with primary sludge.

**Table 1. Characteristics of the olive mill solid waste digestate (OMSW D) used in the experiment. TS: total solids, VS: volatile solids, COD: total chemical oxygen demand, SCOD: soluble chemical oxygen demand, TKN: total Kjeldahl nitrogen and C/N: carbon/nitrogen ratio.**

| **Parameter** | **OMSW D** |
|---|---|
| TS (%) | 2.8 ± 0.1 |
| VS (%) | 2.1 ± 0.0 |
| VS/TS (%) | 74 ± 2 |
| COD (g O₂ L⁻¹) | 27.76 ± 1.48 |
| SCOD (g O₂ L⁻¹) | 3.65 ± 0 71 |
| pH | 7.91 ± 0.2 |
| C/N ratio | 11.0 ± 0.8 |
| TKN (g L⁻¹) | 1.14 ± 0.12 |

### Heavy metals and pathogens in the digestate

In order to evaluate the risk of soil contamination and the contamination of *Lolium rigidum* var. *Wimmera* for use in animal feed, the heavy metal concentration and the presence of pathogens were analyzed in the OMSW digestate. Animal feeding can subsequently influence human health, since animals eating contaminated pastures can cause diseases in humans. The main infectious health hazards associated with feed and forage which pose a hazard to consumers of foods of animal origin are the high concentrations of heavy metals and the presence of microorganisms such as *Salmonella, Escherichia coli,* etc.

The heavy metal concentrations detected in the OMSW digestate (Table 2) were below the limits established as toxic by Spanish law (RD1310/1990), and also by the EU Directive (CEC 2003).

**Table 2 Concentration of heavy metals in the olive mill solid waste (OMSW) digestate and in the OMSW digestate liquid part and solid part after centrifugation.**

| Parameter | OMSW digestate | OMSW digestate Liquid part | OMSW digestate Solid part | European legislation (CEC, 2003) Limit values |
|---|---|---|---|---|
| Cd (mg kg TS⁻¹) | 0.078 ± 0.002 | 0.062 ± 0.017 | 1.434 ± 0.007 | 10 |
| Cu (mg kg TS⁻¹) | 3.084 ± 1.091 | 0.416 ± 0.010 | 106.253 ± 0.003 | 1000 |
| Pb (mg kg TS⁻¹) | 1.052 ± 0.219 | 0.919 ± 0.126 | 15.413 ± 0.130 | 750 |
| Zn (mg kg TS⁻¹) | 12.982 ± 4.683 | 1.877 ± 0.288 | 444.593 ± 0.411 | 2500 |
| Ni (mg kg TS⁻¹) | 2.165 ± 0.284 | 1.350 ± 0.066 | 38.931 ± 0.903 | 300 |
| Cr (mg kg TS⁻¹) | 1.891 ± 0.162 | 0.486 ± 0.021 | 69.284 ± 0.145 | 1000 |
| Hg (mg kg TS⁻¹) | <1.0 | <1,0 | 1.348 ± 0.043 | 10 |

According to Spanish Law (RD 1620/2007) for water reuse as irrigation of pastures for animal consumption, nematodes, *Taenia saginata, Taenia solium, Escherichia coli* (*E. coli*) and presence / absence of pathogens such as *Salmonella* were determined in the OMSW digestate. *E. coli* and *Salmonella* were determined according to UNE-EN ISO 9308-1:2014, nematodes and taenia were determined using the isolation method by classical extraction in Whitehead tray and inverted microscopy. No pathogens were detected in the OMSW digestate, nematodes: 0 egg L⁻¹, *Taenia saginata,* and *Taenia solium:* 0 egg L⁻¹, *E. coli*: 0 colony forming units L⁻¹ and no presence of pathogens such as *Salmonella* were determined in the OMSW digestate.

### Specie selection

A Mediterranean herbaceous species, *Lolium rigidum* var. *Wimmera,* common in pastures with high forage value and frequently used as feed for cattle was selected for the experiments. It is an annual specie, well adapted to the dry conditions of the Mediterranean area and with a high palatability and high nutritional value.

### Quality of the OMSW digestate for agricultural reuse as a fertilizer: experimental design

In order to determine the quality of the OMSW digestate for agricultural reuse as a fertilizer, and its influence on the growth and development of seedlings, different strategies or treatments were established:
(i) Direct use of the raw OMSW digestate for amendment of a nutrient-poor soil. Different mixtures of the OMSW digestate (OMSW D) and silica inert substrate were tested: D1/3: 25% OMSW D - 75 % silica and D1/4: 20% OMSW D - 80% silica, respectively and irrigated with Hoagland nutrient solution at 5% (Hoagland and Arnon, 1938).
(ii) Use of the solid fraction (SD) of the OMSW digestate obtained after centrifugation at 2000 rpm, 2 min for amendment of a nutrient-poor soil. The SD obtained after centrifugation was used in a mixture 25% SD- 75% silica inert substrate and irrigated with Hoagland nutrient solution at 5%.
(iii) Use of the liquid fraction of the OMSW digestate obtained after centrifugation at 2000 rpm, 2 min as fertilizer of a nutrient-poor soil. The fertirrigation tests were carried out in two set of pots with silica inert substrate and irrigated with Hoagland nutrient solution at 5%. The first set of pots was fertirrigated once (F1) with the liquid part of the OMSW digestate after 15 days of the beginning of the experiment. The second set of pots with silica inert substrate and irrigated with Hoagland nutrient solution at 5%, was fertirrigated twice (F2) with the liquid part of the OMSW digestate after 15 and 30 days of the beginning of the experiments.

Two sets of control pots with silica inert substrate and irrigated with Hoagland nutrient solution at 5% (Control H5%) and 20% (control H20%) were used. The main objective of using these two controls was to compare the *Lolium rigidum* growth in a nutrient-poor soil (silica and H5%) with a nutrient-rich soil (silica and H20%).

All OMSW digestate mixtures used in the experiments were in accordance with the limits established by the European Nitrates Directive (EEC, 1991)

Each set of treatments contained 5 replicate pots (0.6 L). In each pot, ten seeds were placed and covered with substrate (1-2 cm). The pots were placed in a glasshouse (General Research Services (CITIUS), University of Seville) with minimum-maximum temperatures of 24-26 °C, 40-60% relative humidity and natural daylight (minimum and maximum light flux: 200 and 1000 µmol m⁻² s⁻¹, respectively). The pots were checked over a period of 50 days for emergence of photosynthetic tissues above the substrate level. We considered that the seedling had emerged once the stem had reached 1 cm in height.

Three parameters of emergence were determined: final emergence percentage, time to first emergence and mean time to emergence (MTE), calculated as: MTE = ∑ᵢ (*nᵢ*x *dᵢ*)/*N*, where *n* is the number of seeds emerged at day *i; d* the incubation period in days; and N is the total number of seeds emerged in the treatment.

After 50 days the sowing and gas exchange were determined. Likewise, seedling height (stem base to maximum height of horizontal leaves), dry root and shoot biomass were measured in each treatment.

### Effect of OMSW digestate on Lolium rigidum var. Wimmera emergence

The effect of different treatments on *Lolium rigidum* emergence was assessed and was compared with the emergence of this Mediterranean herbaceous in the control experiments (H5% and H20%). The emergence rate of D1/3 was 82 ± 4%, for the treatment D1/4 it was 78 ± 6%, 10 ± 6% for the solid fraction of the digestate (SD) and 83 ± 4% and 84 ± 4% for the F1 and F2 treatments, respectively. No statistically significant differences (p > 0.05) were found between the emergence rates of the different treatments (79-84%), except for the treatment SD (10%) (Table 3). In all treatments the emergence time for *Lolium rigidum* was 5 days, except for treatment SD, where the first emergence was delayed until day 23.

**Table 3. Percentage of total emergence of Lolium germination (%), time to first emergence (days) and mean time to emergence (MTE, days) for each treatment. D1/3: mixture 25% OMSWD-75 % silica and D1/4: mixture 20% OMSWD-80% silica, respectively. H5% and H20% are the controls with inorganic Hoagland nutrient solution at 5% (nutrient poor soil) and 20% nutrient rich soil), and F1 and F2 are the Iliquid fraction of digestate used as fertilizer with one and two fertirrigates, respectively. Values represent mean ± standard error. In each column, different letters indicate means that are significantly different from each other (Tukey test, p < 0.05).**

| | % | **First emergence (days)** | **MTE (days)** |
|---|---|---|---|
| H5% | 82 ± 2 a | 5 ± 0 a | 8 ± 1 |
| H20% | 80 ± 3 a | 5 ± 0 a | 8 ± 1 |
| F1 | 83 ± 4 a | 5 ± 0 a | 7 ± 0 |
| F2 | 84 ± 4 a | 5 ± 0 a | 7 ± 1 |
| D1/3 | 82 ± 4 a | 5 ± 0 a | 8 ± 2 |
| D1/4 | 78 ± 6 a | 5 ± 0 a | 8 ± 1 |
| SD | 10 ± 6 c | 23 ± 4 b | 23 ± 4 |

As can be seen, there was no phytotoxic effect of the OMSW digestate on the emergence of *Lolium rigidum,* since no significant differences were found among the treatments (F1, F2, D1/3 and D1/4) and the controls (H5% y H20%). The only treatment that negatively affected the emergence of *Lolium rigidum* was the solid fraction of the OMSW digestate (SD) (Table 3). SD treatment required significantly more time to produce photosynthetic tissue due to the digestate solid fraction content being slower to release organic matter or the lignocellulosic biomass being resistant to microbial degradation, so a clear delay in *Lolium rigidum* emergence was observed (Table 3).

On the other hand, the other treatments did not show a negative effect on the emergence of *Lolium rigidum.* In previous studies, environmental factors such as pH, soil salinity and temperature were identified as the main factors that affect the emergence of rigid ryegrass (*Lolium rigidum*). In addition, nitrogen is one of the main causes of emergence inhibition in seeds. Values above 3% of total nitrogen and a pH between 7.5 and 8 have been described as inhibiters for seed emergence. In the present invention, the total nitrogen content of the OMSW digestate was below 3% (Table 1), although the pH was 7.91, no *Lolium rigidum* seed emergence inhibition was observed.

### Effect of OMSW digestate on biometric characteristics

The effect of the different treatments on the total biomass, on the shoot biomass and on the root biomass was assessed. The effect of the different treatments on the total biomass of *Lolium rigidum* was evaluated (Figure 1A). D1/3 and D1/4 showed similar values, D1/3= 0.609 ± 0.017 and D1/4= 0.625 ± 0.029 g dry matter (DM) to that obtained for the control H20% (0.690 ± 0.020g DM) and were significantly higher than those obtained for all other treatments (H5% = 0.187 ± 0.005 g DM, F1 = 0.324 ± 0.019 g DM, F2 = 0.502 ± 0.015 g DM) (F=106.86, p < 0.001). The H5% control showed the lowest total biomass production, with once again no phytotoxicity observed with the use of the OMSW digestate (Figure 1A).

Shoot biomass was also affected by the different treatments used with significant differences among them (F=50.16, p < 0.001). The seedlings grown in the pots treated with F2 presented shoot biomass values similar to those found for the H20% control seedlings and the maximum values reached during the experiment (H20% = 0.298 ± 0.011 and F2 = 0.282 ± 0.005g DM); the H5% control (nutrient poor soil) was the one with the lowest shoot biomass (0.077 ± 0.004 g DM) (Figure 1D).

With respect to the root biomass, significant differences were also found among the different treatments (F=64.86, p < 0.001). The H20% control (nutrient rich soil) seedling and the D1/3 and D1/4 treatments presented the highest values (0.393 ± 0.025, 0.383± 0.018 and 0.414± 0.025 g DM, respectively). In contrast, the H5% control and the F1 treatment presented the lowest values for root biomass (0.111 ± 0.006 and 0.089 ± 0.006 g DM, respectively) (Figure 1C).

The F1 and F2 treatment seedling presented a significantly lower root/shoot ratio (0.387 ± 0.025 and 0.574 ± 0.033, respectively) than the rest of the treatments (1.337-1.955) (F=22.23, p < 0.01) (Figure 1B).

The results showed that the use of OMSW digestate did not have any negative effect on the growth of *Lolium rigidum;* indeed, with certain treatments a certain positive effect was observed through the increase in total biomass (D1/3 and D1/4); while treatments F1 and F2 showed a positive effect on the growth of the biomass of the shoot of the seedling. In the treatments F1 and especially F2, the seedling contributed significantly more shoot biomass than root biomass, increasing the amount of part available for animal consumption. Although the root/shoot ratio is dependent on the specie and is defined during the ontogeny of the seedling, there are studies that show that it is strongly linked to external factors. Previous results showed that root growth is greater when the seedling has limited water or nutrients In the tests carried out in this experiment, D1/3 and D1/4 treatments are the ones that presented the highest root biomass, so fertirrigation treatments (F1 and F2) are the ones with the most bioavailable nutrients, limiting the growth of the root and helping the growth of the shoot. Nutrients availability is one of the main factors that affect the root elongation, with the increase in nitrogen supply being the factor that most affects the root/shoot ratio. By increasing the nitrogen supply, the shoot increases in relation to the root of the seedling (lower root/shoot ratio).

### Gas exchange measurements and mineral analysis

Gas exchange measurements were taken from randomly selected, fully expanded leaves (n = 12, two measurements per pot plus two additional random measurements), using an infrared gas analyzer in an open system (Li-6400-XT, Li-COR Inc., Neb., USA). Net photosynthetic rate (A), intercellular CO₂ concentration (Ci) and stomatal conductance to CO₂ (Gs) were determined at an ambient CO₂ concentration of 400 ppm CO₂, temperature of 20/25 °C, 50 ± 5% relative humidity and a photon flux density of 1000 µmol m⁻² s⁻¹. Values for the parameters A, Ci and Gs were calculated using the standard formulae of von Caemmerer and Farquhar (1981).

At the end of the experimental period, leaf samples were dried at 80 °C for 48 h and ground. Then, 0.25 g of sample were digested with 4 mL HNO₃, 0.5 mL HF and 1 mL H₂O₂, shaking well to wet the sample completely. Measurements of Mg, K, Ca, S and P were taken by inductively coupled plasma (ICP-OES) (VARIAN ICP 720-ES). Total N-Kjeldahl, samples were treated with concentrated sulfuric acid in the presence of catalyst (mixture of Se and CuSO₄) at 380 °C for 2 h. Ammoniacal nitrogen was determined by the indophenol method in a Bran + Luebbe AIII autoanalyzer. The results were expressed as % N-NH₄ ⁺ of dry matter.

Normality and homogeneity of variances were tested using the Kolmogorov-Smirnov and Levene tests, respectively, in order to assume the hypotheses necessary to perform parametric tests. One way ANOVA was used to examine the significant differences of each variable. Tukey's (post hoc) test was performed for multiple comparisons. The non-parametric equivalent, the Kruskal-Wallis test, was employed when necessary.

### Effect of OMSW digestate on Lolium rigidum gas exchange and nutrients

No treatment showed visual signs of injury to the seedling and, in general, the seedling seemed as vigorous as those grown in inorganic fertilizer (H5% and H20%).

In terms of the net photosynthesis rate, the results showed significant differences among treatments (F=62.98, p < 0.001); seedlings grown in the H5% control presented significantly lower values for net photosynthetic rate (A) (1.2 ± 0.07 µmol m⁻² s⁻¹) and seedlings grown in F2 treatment significantly higher values (12.5± 0.81 µmol m⁻² s⁻¹). The rest of treatments showed similar values for photosynthesis rate (around 6-7 µmol m⁻² s⁻¹); no significant differences were found among them (Figure 2A).

With respect to stomatal conductance (Gs) values, no significant differences were found among the treatments (p > 0.005), with registered values of around 170 µmol m⁻² s⁻¹ (Figure 2B).

Intercellular CO₂ concentration (Ci) showed a similar trend to photosynthesis rate; significant differences were found among treatments (F=16.09, p < 0.001); seedlings grown in H5% control presented significantly higher values for Ci and grown in the F2 treatment showed significantly lower values. No significant differences were found in the rest of the treatments (Figure 2C).

Certain macronutrients such as nitrogen and Mg²⁺ have an important role in photosynthesis function. Nitrogen is essential for the proper development of the seedling, and nitrogen deficiencies affect from growth and development to metabolism to resource allocation. On the other hand, Mg²⁺ plays a key role in the modulation of Ribulose-1,5-bisphosphate carboxylase/oxygenase in the stroma of chloroplast.

Although the Mg²⁺ content in the shoot of *Lolium rigidum* in the different treatments, F1 and F2, was lower (mean 0.18%) than that found in the shoot of the control seedling (H5% and H20%)) D1/3 and D1/4 treatments (mean 0.29%), no decrease in the photosynthetic rate was detected (Table 4). As far as nitrogen is concerned, the *Lolium rigidum* control seedling (H5% and H20%) presented a nitrogen Kjeldahl content of 0.76 and 1.29%, respectively, significant differences were also found between the different treatments (F=38.09; p < 0.001) (Table 4). Similar values for H20% control nitrogen content were observed in treatments D1/3, D1/4 and F1 (1.04, 1.06 and 1.49%, respectively), no significant differences were found among the treatments (p > 0.005). In contrast, during the F2 treatment, the nitrogen content of the *Lolium rigidum* leaves increased to 4.02%, showed the highest values.

**Table 4 Concentration of nutrients in the shoots of Lolium rigidum var. Wimmera grown in the different OMSW digestate treatments. Where OMSW D: raw olive mill solid waste digestate for amendment of a nutrient-poor soil, D1/3: mixture 25% OMSW D-75 % silica and D1/4: mixture 20% OMSW D-80% silica, respectively. H5% and H20% are the controls with inorganic Hoagland nutrient solution at 5% (nutrient poor soil) and 20% nutrient rich soil), and F1 and F2 are the liquid fraction of digestate used as fertilizer with one and two fertirrigates, respectively. OMSW: olive mill solid waste and N Kjeldahl: Kjeldahl nitrogen.**

| **OMSW digestate treatments** | ***Lolium* part** | **Ca %** | **Fe mg kg⁻¹** | **K %** | **Mg %** | **Na %** | **P %** | **N Kjeldahl %** |
|---|---|---|---|---|---|---|---|---|
| D1/3 | shoot | 0.83 | 204.5 | 2.15 | 0.29 | 0.64 | 0.30 | 1.04 |
| D1/4 | shoot | 0.65 | 272.3 | 2.29 | 0.25 | 0.67 | 0.38 | 1.06 |
| F1 | shoot | 0.38 | 207.5 | 2.69 | 0.19 | 1.16 | 0.25 | 1.49 |
| F2 | shoot | 0.32 | 400.8 | 3.08 | 0.16 | 1.36 | 0.50 | 4.02 |
| H20% | shoot | 0.66 | 254.4 | 1.87 | 0.36 | 0.48 | 0.21 | 1.29 |
| H5% | shoot | 0.75 | 156.9 | 1.26 | 0.28 | 0.44 | 0.11 | 0.76 |

Nitrogen acquisition is one of the most important factors for seedling production. Nitrogen availability to animals is predominantly from forage proteins. It has been shown that sheep preferred to eat high-nitrogen seedling at the reproductive stage with higher nutritional value. Nitrogen is the main nutrient for proteins providing, which are required by animals for the production of milk and meat. The availability of nitrogen for the development of forages from soil amendments or fertirrigation from organic fertilizers is an environmental advantage.

The phosphorus (P) content of the F2 treatment shoot biomass was significantly higher (0.50%) than the P shoot content of rest of the treatments (mean 0.21) (p <0.001) (Table 4). P is an essential macronutrient for plant development and maturity as it is involved in photosynthesis, nutrient transport, energy storage and transfer, cell division, etc. In addition, animals need P because its vital role in the development and maintenance of skeletal tissue, it also has a special function in cell growth and play a key role in many other metabolic functions.

Potassium (K) shoot biomass content after F1 and F2 treatments were also significantly higher (average 2.7%) than in control H5% and H2O% (1.5) and treatments D1/3 and D1/4 (2.1) (p <0.001) (Table 4). K is an essential nutrient and required in large quantities for the growth and reproduction of plants, affects the opening and closing of stomata, so that it will influence photosynthesis and also ATP generation.

With respect to sodium (Na), it was observed that plants treated with F1 and F2 (1.2%) (Table 4), sodium content in shoot biomass was higher than the content obtained after others treatments (0.5-0.6) doubling their value (p<0.001). The sodium content of the forage plants acts as an attractant for cattle and in the majority of land destined for forage cultivation, it is usually increased, thus increasing its content in the plants and improving the acceptability of the cattle by this type of plants.

Being the iron (Fe) content also higher after F2 pretreatment, reaching values of up to 400 mg kg-1 (Table 4). The iron content values of the aerial part of the plants treated with F2 were significantly higher than the iron content after the other treatments (200 mg kg⁻¹) (p<0.001).

### Conclusion

This study evaluated the use of olive mill solid waste digestate as an organic amendment and as fertilizer. The results showed that the OMSW digestate contains: organic matter, macro and micronutrients which are suitable for use in agriculture as an organic amendment and as fertilizer. Heavy metal contents were below the threshold established by the Spanish and European legislation on sludge spreading. No pathogens were detected in the OMSW digestate. A clear delay in *Lolium rigidum* seed emergence was detected using the solid fraction of the OMSW digestate, but no phytoinhibition was observed with the other treatments. The most bioavailable organic matter remains in the liquid fraction of the digestate, improving the growth of *Lolium rigidum.* The results clearly showed that the F2 treatment (two fertirrigations with the liquid fraction of the digestate) was the one that best contributed to the development of *Lolium rigidum,* improving the growth of the aerial biomass, photosynthetic rate and nutritional content of the seedling.

## Claims

1. Use of the liquid fraction of an olive mill solid waste digestate in fertirrigation treatments through a process which comprises :
a) removal of olive stone pieces from olive mill solid waste
b) anaerobic digestion of the olive mill solid waste after the olive stone removal
c) centrifugation of the digestate resulting from the previous step followed by solid - liquid separation
d) fertirrigation with the liquid fraction of the olive mill solid waste digestate.

2. Use according to claim 1 wherein:
a) the olive stone pieces are removed from olive mill solid waste using a 2 mm mesh
b) the anaerobic digestion is carried out at a temperature comprised between 35-38°C in anaerobic reactors inoculated with biomass obtained from a brewery anaerobic sludge blanket reactor at a inoculum/substrate ratio of 2.
c) centrifugation of the digestate is performed at 2000 rpm during 2 min.

3. Use according to anyone of claims 1 or 2, wherein the liquid fraction of olive mill solid waste digestate is tested for fertirrigation of herbaceous species.

4. Use according to claim 3, where the herbaceous species is *Lolium rigidum* var. *Wimmera.*

5. Use according to claim 4, where two fertirrigations with the liquid fraction of the olive mill solid waste digestate are applied.
